# EUROPÄISCHE PATENTSCHRIFT

(11) **EP 3 111 058 B1**
(45) Veröffentlichungstag und Bekanntmachung des Hinweises auf die Patenterteilung: **08.07.2020**
(21) Anmeldenummer: 15700631.3
(22) Anmeldetag: 07.01.2015
(51) Int. Cl.: F01K 3/12, F01K 5/02, F01K 25/06, F22B 3/04, F28D 20/00

(54) **VERFAHREN UND VORRICHTUNG ZUR SPEICHERUNG VON ENERGIE IN LAUGE**
METHOD AND APPARATUS FOR STORING ENERGY IN ALKALINE SOLUTION
PROCÉDÉ ET DISPOSITIF DE STOCKAGE D'ÉNERGIE DANS UNE SOLUTION ALCALINE

(30) Priorität: 28.02.2014 DE 102014002678
(43) Veröffentlichungstag der Anmeldung: 04.01.2017
(73) Patentinhaber: bw-energiesysteme GmbH, 15526 Bad Saarow (DE)
(72) Erfinder: WOLF, Bodo M., 87719 Mindelheim (DE)
(74) Vertreter: Zellentin & Partner mbB Patentanwälte
(86) Internationale Anmeldenummer: PCT/EP2015/000012
(87) Internationale Veröffentlichungsnummer: WO 2015/128049

(56) Entgegenhaltungen:
- DE-A1- 3 327 838
- DE-A1-102007 006 512
- US-A- 4 691 522
- US-A- 5 419 145
- US-A1- 2007 000 267
- US-A1- 2008 053 127

## Beschreibung

Die vorliegende Erfindung betrifft ein Verfahren und eine Vorrichtung zur Speicherung von Energie in Lauge, wie Metallhydroxide oder Metallsalze vorzugsweise in Form wässriger Lösungen, insbesondere in Natronlauge, durch Desorption und Absorption von Wasserdampf.

Das Anwendungsgebiet der Erfindung ist die Speicherung von elektrischer und/oder thermischer Energie in Energieversorgungssystemen in den Kommunen, im Gewerbe, in der Industrie und im Verkehrswesen zum Zwecke des Ausgleiches zwischen Angebot und Bedarf an Elektro- und Wärmeenergie, durch Umwandlung von Dampf-, Gasturbinen- und Motor-Kraftwerken und Heizkraftwerken sowie von Photovoltaik- und Windkraftanlagen in Speicherkraft- bzw. Speicherheizkraftwerke.

Die Hauptaufgabe der Energieversorgung im 21. Jahrhundert ist die Ablösung der fossilen und atomaren Brennstoffe durch solar-regenerative Energie. Der Begriff "solar-regenerative Energie" soll vorliegend zur Abgrenzung von fossilen und atomaren Brennstoffen dienen, da derzeit auch wiederaufbereitete atomare Brennstoffe in einigen Fällen als "regenerative" Energie bezeichnet werden. Die bekanntesten Anlagen zur Umwandlung von solar-regenerativer Energie in Elektroenergie sind derzeit Photovoltaik-, Wind- und Wasserkraftanlagen. In Rahmen der vorliegenden Anmeldung sind die Begriffe solar-regenerative Energie und regenerative Energie synonym im Sinne der obigen Abgrenzung eingesetzt. Die Realisierung dieser Substitution wird beim Stand der Technik durch unzuReichende Technologien für die Energiespeicherung erschwert, obwohl es eine Vielzahl von technischen Lösungen und Vorschlägen gibt. Die Notwendigkeit der Energiespeicherung in der heutigen Energiewirtschaft ergibt sich aus dem Verhalten der Energieabnehmer, was sich trotz aller Bemühungen auch in Zukunft nicht wesentlich ändern wird. Gelöst wurde die Aufgabe der Energiespeicherung bisher im Wesentlichen durch Speicherung fossiler und atomarer Brennstoffe vor der Energieumwandlung und - anwendung und in ihrer Leistung regelbare Energieumwandlungsverfahren, die dem Lastgang (auch Lastprofil oder Lastkurve), d.h. dem zeitlichen Verlauf der abgenommenen Leistung (z. B. der elektrischen Leistung oder der Gas-Leistung) über eine zeitliche Periode, der Energieversorgungssysteme folgen können.

Energiespeicher zwischen der Umwandlung der fossilen und atomaren Brennstoffe und den Energieabnehmern, wie Pumpspeicherwerke, Wärmespeicher sowie elektrische Akkumulatoren und Batterien, haben demgegenüber gegenwärtig untergeordnete Bedeutung. Da die zukünftig bedeutenden Energiequellen der solar- regenerativen Energiewirtschaft, wie insbesondere Sonnenstrahlung und Windenergie, nur zeitweise zur Verfügung stehen und nicht gespeichert werden können, werden dem gegenüber Speichermethoden, die zwischen der Umwandlung solar-regenerativer Energie und den Energieabnehmern angeordnet sind, das zukünftige Energieversorgungssystem bestimmen.

Daneben gilt es jedoch auch Möglichkeiten für die Speicherung temporärer Überkapazitäten der konventionellen, d.h. mit Brennstoffen, wie Kohle, Gas, einschließlich Erd- und Biogas, oder atomaren Brennstoffen, betriebenen Energiewirtschaft zu schaffen.

Beim Stand der Technik stehen dafür, insbesondere in Bezug auf die Kosten, Leistungsfähigkeit und Verfügbarkeit, Verfahren und Technologien zur Verfügung, die die Aufgabe nicht zufriedenstellend erfüllen können.

Die Folge ist, dass der Ausbau der regenerativen Energie eingeschränkt wird und sowohl konventionelle Kraftwerke als auch Wind- und Photovoltaikkraftwerke unter Inkaufnahme ökonomischer Verluste zur Vermeidung von Netzüberlastungen abgeschaltet werden.

Mit der EP 1 987 299 A0 wurde deshalb ein reversibler Kreisprozess vorgeschlagen, bei dem durch eine Wärmepumpe Exergie mit Anergie zu fühlbarer Wärme mit Heizwärmeniveau "gemischt" und diese gespeichert wird, bevor die Exergie durch einen Kraftprozess bedarfsgerecht (d.h. gemäß Lastgang) wieder abgeschöpft wird. Bei der praktischen Umsetzung hat sich gezeigt, dass die zur Verfügung stehenden Wärmepumpenkompressoren und Expansionsmaschinen nur einen Rückgewinnungsgrad von ca. 50 % ermöglichen. Eine Verbesserung wird aus der Entwicklung spezieller Turbomaschinen erwartet.

Zu ähnlichen Ergebnissen führen Druckluftspeicher, die letztlich auch fühlbare Wärme speichern, damit das aufgebaute Druckgefälle der Luft effektiv genutzt werden kann.

Die Ursache ist, dass bei der Speicherung von fühlbarer Wärme neben der Exergie auch Anergie gespeichert werden muss, was spezifisch niedrige Speicherarbeit und damit große Speicher zur Folge hat.

Die höchste Form der Exergiespeicherung kann durch Umwandlung von regenerativer Energie in chemische Energieträger, z.B. Kohlenwasserstoffe, wie Methan, Benzin, Kerosin, Diesel- und Heizöl sowie Alkohole, wie Methanol und Ethanol, die kompatibel zur bereits bestehenden Infrastruktur sind, erreicht werden, wie sie z.B. in der WO 2008/014854 A1 beschrieben wird. Demgegenüber ist die Speicherung von regenerativer Energie in Form von reinem Wasserstoff als Generallösung unzweckmäßig. Sie erfordert eine neue Infrastruktur bei niedrigem Rückgewinnungsgrad. Die chemische Anbindung von Wasserstoff an Kohlenstoff ist grundsätzlich die effektivste Methode zur Speicherung von Wasserstoff. So sind in 1 m³ Diesel 1200 m³ Wasserstoff bei Umgebungsdruck stabil gebunden und nach der WO 2008/014854 A1 können solche Verfahren einen Rückgewinnungsgrad von bis zu 70 % erreichen.

Die Umwandlung von regenerativer Energie in chemische Energieträger und deren Speicherung zum Zwecke der Verwendung dieser Brennstoffe zur Befeuerung von Kraftprozessen des Standes der Technik für die Stromerzeugung mit den üblichen Wirkungsgraden der Technik, die zu Gesamtwirkungsgraden der Stromrückgewinnung von 25 bis 35 % führt, ist jedoch unzweckmäßig. Unter Beachtung der Energieverluste aus dem elektrischen Netzen ergibt sich für diese Art der Speicherung, dass je MWh rückgewonnener Elektroenergie 5 bis 10 MWh regenerative Energie bereitgestellt werden müssen, was die Stromgestehungskosten gegenüber der direkten Nutzung des Stromes vervielfacht.

Die wahrscheinlich bekannteste Methode der Exergiespeicherung sind die Pumpspeicherwerke, die pro m³ Wasser bei einer Fallhöhe von 400 m eine elektrische Arbeit von ca. 1 kWh/m³ Wasser verrichten können. Die Nachteile dieser Methode sind, dass nicht überall Standorte für Pumpspeicherkraftwerke gegeben sind sowie der hohe Erschließungsaufwand und die drastischen Eingriffe in die Natur.

Dieser Mangel wurde mit der EP 2 067 942 A2 behoben, indem die isotherme Änderung des Aggregatzustandes des Kohlendioxides bei Umgebungstemperatur für den Aufbau einer Druckdifferenz zum Umgebungsdruck genutzt wird. Der Vorteil dieser Methode ist die Standortunabhängigkeit. Nachteilig ist der hohe Materialaufwand für die Speicher des Wassers unter Druck, bezogen auf das Arbeitsvermögen des gespeicherten Wassers, das bei Nutzung von Umgebungswärme für die Verdampfung und Kondensation des Kohlendioxides ebenfalls mit 1 kWh/m³ Wasser angegeben werden kann.

Die US 4,691,522 A beschreibt Varianten eines Absorptionsverfahrens zur Erzeugung von Strom mit Hilfe eines Kreislaufes wässriger Lösungen, deren Konzentration zyklisch durch Desorption von Wasserdampf gesenkt und durch Absorption von Wasserdampf wieder auf die anfängliche Konzentration angehoben werden soll.

Die US 5,419,145 A betrifft die Optimierung von Arbeitsmitteln für Sorptionskälte- oder Wärmepumpenanlagen durch Additive, die die Temperaturspreizung des Arbeitsmittels, und damit die spezifische Aufnahme z.B. von Wasserdampf, im Prozesszyklus und die Wärmeübergangswerte erhöhen sollen.

Die US 2008/0053127 A1 betrifft Dampfwärmepumpenanlagen zur Erhöhung des Druckes von Dampf aus einem Dampferzeuger zum Zwecke der Versorgung eines Abnehmers mit stabilem Dampfdruck, durch Rückführung von komprimiertem Dampf über einen Masseregler in den Dampferzeuger.

Die DE 10 2007 006 512 A1 betrifft zyklische, emissionsfreie Verfahren und Vorrichtungen zum Speichern von Energie und/oder zur gesteuerten Umwandlung dieser Energie in Arbeit, wobi zur Energiespeicherung ein geeignetes dynamisches Gleichgewichtssytem verwendet wird, deren Komponenten über einen Carnotprozess separierbar sind.

Ziel und Aufgabe der Erfindung sind Speicherkraft- oder Speicherheizkraftwerke, denen zyklisch Energie zum Zwecke der energetischen Aufladung speicherbarer Stoffe zugeführt wird, welche stofflich verändert gespeichert, bedarfsgerecht dem Speicher entnommen und unter Freisetzung von Energie wieder in ihren Ursprungszustand zurückgeführt werden, also ein reversibler Kreisprozess. Diese Stoffe sollen Energie mit hoher Dichte und hoher Kapazität über lange Zeiträume speichern können und die Vorrichtung soll unter Verwendung von in der Industrie bekannten Ausrüstungen und Arbeitsmitteln, insbesondere der Kraftwerkstechnik und der chemischen Industrie, realisiert werden können.

Die Erfindung betrifft daher insbesondere ein Verfahren und eine Vorrichtung zur Speicherung von Energie in Lauge zum Zwecke der Qualifizierung von regenerativer Energie, insbesondere aus Windkraft- und Photovoltaikanlagen, für die bedarfsgerechte Versorgung (d.h. gemäß Lastgang) der Abnehmer, und/oder auch zur Speicherung temporärer Überkapazitäten der konventionellen, d.h. mit Brennstoffen, wie Kohle, Gas, einschließlich Erd- und Biogas, oder atomaren Brennstoffen, betriebenen Energiewirtschaft durch Absorption und Desorption von Wasserdampf in bzw. aus Laugen, z.B. Natronlauge, wobei die Einkopplung der Elektroenergie durch elektrische Antriebe für die Kompression des Dampfes aus der Desorption erfolgt und die Rückgewinnung der eingekoppelten Energie durch Nutzung der Absorptionswärme für eine Dampferzeugung, z. B. über eine Heißwassererzeugung für eine Flashverdampfung und Expansion des Flashdampfes auf das Druckniveau der Absorption, realisiert wird.

Der Vorteil der Erfindung ist die standortunabhängige Speicherung von Energie mit gegenüber dem Stand der Technik hoher Energiedichte bis zu einem Arbeitsvermögen, welches bisher nur von Wasserpumpspeicherwerken erreicht wurde.

Die Aufgabe wird erfindungsgemäß gelöst durch Kombination eines Laugekreislaufes mit einem oder mehreren Wasserkreisläufen. Dabei arbeitet das erfindungsgemäße Verfahren vorzugsweise durch Ein- und Auskopplung von Wasserdampf in bzw. aus Lauge, der durch Einkopplung von thermischer Energie und erforderlichenfalls durch technische Arbeit über die Desorption von Wasserdampf aus Lauge bereitgestellt wird und im Zuge der Absorption thermische Energie oder technische Arbeit wieder abgibt, wobei die technische Arbeit vorzugsweise in Form von Elektroenergie abgeleitet wird.

Als Lauge im Sinne der vorliegenden Erfindung gelten Verbindungen, welche die Eigenschaft haben Wasser(dampf) reversibel zu absorbieren und zu desorbieren, wie Metallhydroxide oder Metallsalze vorzugsweise in Form wässriger Lösungen, vorzugsweise wässrige Erdalkali- oder Alkalimetallhydroxid- oder -halogenidlösungen, insbesondere wässrige Natriumhydroxid-, Kaliumhydroxid- oder Lithiumbromidlösungen.

Wesentlich im Rahmen der vorliegenden Erfindung ist, dass in einem Laugekreisprozess (d.h. einem Sorptionsprozess mit Laugen, insbesondere Metallhydroxiden/-salzen, vorzugsweise Natronlauge und Wasser(dampf)) keine chemische Energie durch Stoffumwandlung freigesetzt wird, sodass nur die Bindungsenergie zwischen Lauge, wie Metallhydroxid/-salz, und Wasser für technische Arbeit zur Verfügung steht. Diese Bindungsenergie, die isobaren Siedetemperaturen und der Carnot-Wirkungsgrad steigen mit zunehmender Konzentration der Lauge. Daraus ergibt sich bei Laugen auch die Möglichkeit, die bei höherer Konzentration durch Absorption freigesetzte Wärme rekuperativ an eine Desorption bei niedrigerer Konzentration oder an Wasser zu übertragen und so Wasserdampf mit gegenüber der Absorption höherem Druck freizusetzen, der nach Verrichtung von technischer Arbeit als Absorptionsdampf verwendet werden kann.

Die erfindungsgemäßen Prozessstufen der Desorption und Absorption arbeiten zweckmäßig isobar mit gleitenden Siedetemperaturen, die durch die Konzentrationsgrenzen der zugeführten und abgeführten Lauge und das gewählte Druckniveau der Desorption und/oder Absorption vorgegeben sind.

Die Temperaturdifferenz zwischen Kondensationstemperatur des Desorptionsdampfes und der Armen Lauge bei der Desorption beträgt beispielsweise bei einem Wasserdampfdruck von 1 bar bei einer Konzentration der zugeführten Lauge von 0,40 kg NaOH/kg Lauge 30 K und zwischen abgeführter Lauge mit 0,74 kg NaOH/kg Lauge 95 K. Im Falle der Absorption sind die Konzentrationsverhältnisse der zu- und abgeführten Lauge umgekehrt, die Temperaturdifferenz jedoch gleich.

Gestaltet wird die Kombination erfindungsgemäß durch zyklische Desorption von Wasserdampf aus einem Laugekreislauf unter rekuperativer Zuführung der Desorptionswärme an die Lauge aus einem Wärmeträgerkreisprozess, wobei der bevorzugte Wärmeträger Druckwasser ist (primärer Wasserkreisprozes), und zyklische Absorption von Wasserdampf in die Lauge unter rekuperativer Abführung der Absorptionswärme aus der Lauge an einen Kühlkreisprozess, bei ebenfalls bevorzugt Druckwasser, aber als Kühlmittel (sekundärer Wasserkreisprozess), verwendet wird, wobei die durch das Kühlmittel aufgenommene Absorptionswärme durch im Druck gestufte Flashverdampfung mit dem Flashdampf aus dem Wasserkreisprozess wieder abgeführt und die für die Desorption erforderliche Wärme dem primären Wasserkreisprozess durch Kondensation von im Druck gestuften komprimierten Wasserdampf aus der Desorption direkt oder rekuperativ zugeführt wird. In den Heiz- und Kühlkreisläufen können erfindungsgemäß auch fluide, elektrisch leitende Arbeitsmittel als Wärmeträger eingesetzt werden, in denen Wasserdampf kondensiert oder Wasser verdampft werden kann und die durch Magnetfelder im Druck erhöht und gesenkt werden können.

Erfindungsgemäß ist weiterhin, dass der Dampf aus der Flashverdampfung (weiter: Flashdampf) unter Abgabe von technischer Arbeit expandiert und danach der Lauge als Absorptionsdampf mindestens teilweise zugeführt wird.

Erfindungsgemäß vorteilhaft ist es dabei einerseits, den Wasserdampf vor oder nach der Kompression durch Einspritzung von Wasser mit einer Temperatur, die über der Kondensationstemperatur des Dampfes liegt, so mit Wasseraerosolen zu beladen, dass der Dampf vor oder nach der Kompression als trockener Sattdampf zur Verfügung steht, und andererseits den Flashdampf, der nach der Expansion als Nassdampf vorliegt, vor seiner Einleitung in die Lauge als Absorptionsdampf, durch rekuperative Beheizung mit Flash- oder Expansionsdampf, der durch eine um mindestens 2 K höhere Kondensationstemperatur gekennzeichnet ist, getrocknet wird.

Kennzeichnend für das erfindungsgemäße Verfahren ist, dass die mittlere spezifische Enthalpiedifferenz des Flashdampfes größer ist als die des bei der Desorption aus der Lauge ausgetriebenen Wasserdampfes im Sattdampfzustand (weiter: Desorptionsdampf), was zur Folge hat, dass der Massestrom des Desorptionsdampfes größer ist als der aus dem sekundären Wasserkreisprozess zur Verfügung stehende trockene Flashdampf nach der Expansion, so dass dieser trockene Flashdampfmassestrom für die zyklische Absorption und damit zur Sicherung der Stoffbilanz des reversiblen Desorptions-/Absorptionsprozesses nicht ausreicht.

Daraus erwächst der Erfindung die Aufgabe, Maßnahmen vorzuschlagen, die den Absorptionsdampf-Massestrom erhöhen, die Stoffbilanz des Verfahrens sichern und die Energiebilanz der Teilprozesse synchronisieren.

Erfindungsgemäß wird das erreicht, indem mehr Desorptionsdampf als für die Beheizung der Desorption erforderlich ist oder der gesamte Desorptionsdampf komprimiert und stufenweise in den Heizwasserkreislauf eingebunden, dort kondensiert und mehr Wassermasse aufheizt, als für die Beheizung der Desorption erforderlich und die Wassermasse des primären Wasserkreislaufes um die Masse des Desorptionsdampfes steigt. Dieses heiße Überschusswasser wird aus dem primären Wasserkreislauf z. B. in einen Druckwasser-Schichtenspeicher abgeleitet und aus diesem bedarfsgerecht zusätzlich über den sekundären Wasserkreislauf der Flashverdampfung zugeführt, sodass bei der Absorption ein Dampfmassestrom aus dem Wasserkreislauf als Flashdampf abgetrennt werden kann, der nach seiner technische Arbeit leistenden Expansion und Kondensatabtrennung bzw. Trocknung mindestens noch dem zur Sicherung der stöchiometrischen Stoffbilanz erforderlichen Dampfmassestrom für die Absorption im reversiblen Laugekreislauf entspricht.

Durch die erfindungsgemäße Beladung des zu komprimierenden oder des komprimierten Dampfes mit Wasseraerosolen wird erreicht, dass die Heizleistung des Sattdampfes nach der Kompression höher ist, als der Wärmebedarf des Heizwasserkreislaufes der Prozessstufe Desorption, also des Wärmebedarfes der Desorption im gekoppelten Laugekreislauf. Das hat nun wieder zur Folge, dass ein gegenüber dem Desorptionsdampf höherer Massestrom zum Zwecke der Beheizung des Wasservorlaufes im Heizkreislauf der Desorption komprimiert werden muss. Erfindungsgemäß vorteilhaft wird das realisiert unter Einspritzung von Wasser aus dem nach der Dampfinjektion vorliegenden Kreislaufwasser (Heizwasservorlauf) und/oder dem Heizwasserrücklauf, wobei, bei Einspritzung von heißerem Vorlaufwasser anstelle von Wasser aus dem Rücklauf, die zu komprimierende Dampfmasse und damit die Heizleistung des Dampfes aus der Dampfkompression (Wasserdampfwärmepumpe) steigt. Die Steigerung des Heizdampfmassestromes kann reguliert werden durch eine Regelung der Temperatur des Einspritzwassers, z.B. durch Zumischung von Vorlaufwasser zum Rücklaufwasser.

Erfindungsgemäß wird durch die Einspritzung von Wasser mit einer gegenüber der Temperatur des Sattdampfes höheren Temperatur der zu komprimierende Dampf so mit Wasseraerosolen beladen, dass der Dampf nach der Kompression mindestens als trockener Sattdampf vorliegt.

Da entsprechend der Aufgabe der Erfindung, Speicherung von Energie, Desorption und Absorption nicht gleichzeitig, sondern zeitversetzt mit zwischengeschalteten Speichern für Lauge und Wasser betrieben werden, ist es nicht möglich, die während der Desorption dem Wasserkreislauf zugeführte und nicht für die Desorption erforderliche Wärmeenergie zeitgleich an die erfindungsgemäß während der Absorption ablaufende Flashverdampfung abzuführen. Deshalb wird in die Wasserkreisläufe der Prozessstufen Desorption und Absorption erfindungsgemäß ein Heizwasser-Schichtenspeicher integriert. Während der Desorption wird diesem Speicher Heizwasser aus dem Kreislaufwasservorlauf mit einer bis über der Siedetemperatur der Reichen Lauge liegenden Temperatur von oben zugeführt. Diese Zuführung verdrängt die gleiche Wassermasse aus dem Schichtenspeicher über eine am unteren Ende des Schichtenspeichers angebrachte Ableitung. Diese Wassermasse wurde während der Absorption, durch Flashverdampfung auf mindestens die Siedetemperatur der letzten Flashstufe ausgekühltes Kreislaufwasser, dem Schichtenspeicher von unten mit dem Ziel zugeführt, wiederum die gleiche Masse an, während der Desorption zugeführtem Heizwasser, nach oben aus dem Schichtenspeicher zu drücken und über den sekundären Wasserkreislauf der Flashverdampfung zu zuführen.

Das aus dem Schichtenspeicher während der Desorption verdrängte, durch Flashverdampfung ausgekühlte Kühlkreislaufwasser wird erfindungsgemäß zur rekuperativen Vorwärmung der der Desorption zuzuführenden Armen Lauge eingesetzt und das während der Absorption aus dem Schichtenspeicher verdrängte Wasser mit einer Temperatur, die über der des Kühlkreislaufwassers nach der ersten Stufe der Flashverdampfung liegt, der Flashverdampfung zugeführt.

Daraus ergibt sich, dass es zweckmäßig ist, die Wasserkreisläufe der Prozessstufen Desorption und Absorption in primäre und sekundären Kreisläufe aufzuteilen, wobei das Wasser im sekundären Kreislauf der Prozessstufe Absorption durch Flashverdampfung so abgekühlt wird, dass die Wassertemperatur mindestens 2 K unter der Siedetemperatur der Armen Lauge liegt und die Absorptionswärme vollständig aufnehmen kann, und der primäre Wasserkreislauf der Prozessstufe Desorption durch gestufte Injektion oder Kondensation von komprimierten Dampf mindestens soweit aufgeheizt wird, dass er mindestens eine Temperatur erreicht, die über der Siedetemperatur der Reichen Lauge liegt.

Zusammengefasst: Der sekundäre Wasserkreislauf der Prozessstufe Desorption hat die Aufgabe, den Dampf aus der Desorbtion aufzunehmen, zu kondensieren und die Desorption zu beheizen und der der Prozessstufe Absorption, die Absorptionswärme aufzunehmen und eine unter Beachtung der nachfolgenden, technische Arbeit leistende Expansion für die Absorption erforderliche Dampfmasse durch Flashverdampfung zu sichern.

Die Arbeit leistende Expansion des Flashdampfes führt ins Nassdampfgebiet. Es ist thermodynamisch vorteilhaft, die Dampffeuchte, vor Verwendung des expandierten Flashdampfes als Absorptionsdampf, zu entfernen, was den Massestrom des Absorptionsdampfes reduziert, oder aber den Nassdampf durch rekuperative Zuführung von Wärme, z. B. durch Kondensation von Entnahmedampf aus der Dampfexpansion mit gegenüber dem Absorptionsdampf mindestens 1 K höherer Kondensationstemperatur, oder aus einer partiellen Absorption von expandiertem Flashdampf, zu trocknen oder zu überhitzen. Die Überhitzung des Dampfes erfolgt dann erfindungsgemäß bis auf eine Temperatur, die eine Expansion des Dampfes auf trockenen Sattdampf erlaubt.

Das erfindungsgemäße Verfahren ist somit gekennzeichnet durch Lauge- und Wasserkreisläufe, die stofflich und energetisch so gekoppelt sind, dass ihre Stoff- und Energiebilanzen ausgeglichen und geschlossen sein können.

Erfindungsgemäß kennzeichnend für den Laugekreisprozess ist somit, dass
- der Wasseranteil in der Lauge mindestens zwischen zwei Konzentrationen, einer niederen (Arme Lauge) und einer höheren (Reiche Lauge), die die zur Konzentration gehörende untere und obere Siedetemperatur der Lauge kennzeichnen (über die Bindungsenergie zwischen Lauge, wie Metallhydroxid/- salz, und Wasser), durch zyklische Desorption und Absorption reversibel mit Wasserdampf eingestellt wird.
- die für die Desorption erforderliche Wärme rekuperativ von einem Wasserkreislauf an die Arme Lauge übertragen wird, wodurch die Temperatur des Wasserkreislaufes bis auf mindestens 1 K über die Siedetemperatur der Armen Lauge sinkt und der dabei anfallende Desorptionsdampf, vorteilhaft über mehrere Stufen, komprimiert und im Wasserkreislauf kondensiert wird, durch Injektion in den Wasserkreislauf oder durch Einspritzung von Kreislaufwasser in den komprimierten Dampf, und so die Temperatur des Wasserkreislaufes auf mindestens 1 K über die Siedetemperatur der Reichen Lauge angehoben wird.
- die Absorptionswärme von der Lauge an das Wasser des Kühlkreislaufes übertragen wird, diesen aufheizt und der erhitzte Wasserkreislauf durch Flashverdampfung, vorteilhaft mehrstufig, unter Bildung von Wasserdampf auf mindestens 1 K unter die Siedetemperatur der Armen Lauge abgekühlt und gleichzeitig der für die Absorption erforderliche Dampf unter Beachtung einer nachfolgenden, technische Arbeit leistenden Dampfexpansion, über Flashverdampfung aus dem Wasserkreislauf gewonnen wird.

Daraus ergibt sich, dass erfindungsgemäß der primäre und sekundäre Wasserkreislauf und der Laugekreislauf über einen Heizwasserschichtenspeicher und einen vorzugsweise unter Umgebungsdruck arbeitenden Kammerspeicher (auch Produktspeicher genannt) für Arme und Reiche Lauge sowie Wasser gekoppelt und gekennzeichnet sind
einerseits durch
   - rekuperative Abführung von fühlbarer Wärme aus dem Wasser-Heizkreislauf der Prozessstufe Desorption an den Laugekreislauf zum Zwecke der Desorption von Wasserdampf aus der Lauge,
   - Aufheizung des Wasser-Heizkreislaufes der Desorption durch Kondensation von durch Kompression im Druck erhöhtem Wasserdampf und dessen Einbindung in den primären Wasserkreislauf der Desorption des Laugekreislaufs oder von externem Dampf oder externer Wärme,
   - Aufladung eines Wasserschichtenspeichers durch Zuführung von für die Beheizung der Desorption nicht erforderlichen, durch Dampfkondensation aufgeheizten Wassers aus dem Wasserkreislauf der Desorption von oben, unter gleichzeitiger Verdrängung und Ableitung von durch Flashverdampfung ausgekühltem Wasser aus dem Wasserkühlkreislauf der Absorption aus dem Wasserschichtenspeicher nach unten,
   - Abkühlung des aus dem Wasserschichtenspeicher während der Desorption verdrängten Wassers durch rekuperative Wärmeübertragung seiner fühlbaren Wärme an die der Desorption zufließende Arme Lauge und Einlagerung des ausgekühlten Wassers in einen Produktspeicher.
andererseits durch
   - rekuperative Aufheizung des Wassers im Kühlkreislauf der Absorption durch Übertragung der fühlbaren Wärme aus der Absorption von Wasserdampf in die Lauge.
   - Auskühlung des Wassers aus dem Kühlkreislauf der Absorption und des aus dem integrierten Wasserschichtenspeicher zugeführten Heizwassers aus der Prozessstufe Desorption durch ein- oder mehrstufige Flashdampferzeugung und Abführung des für die Kühlung der Prozessstufe Absorption nicht erforderlichen durch Flashverdampfung ausgekühlten Wassers an den Wasserschichtenspeicher von unten unter Verdrängung des gleichen Massestromes von Heizwasser aus dem Schichtenspeicher nach oben und dessen Zuführung zur Flashverdampfung.
   - Auskopplung von technischer Arbeit durch Expansion des Flashdampfes auf das Druckniveau der Absorption und Bereitstellung des für die zyklische Absorption erforderlichen Wasserdampfmassestromes in Höhe des Massestromes des Desorptionsdampfes.
   - Überführung des der Absorption zuzuführenden Flashdampfes vom Nassdampfzustand in den Zustand des trockenen Sattdampfes oder des überhitzten Dampfes durch rekuperative Beheizung durch den Wasserkreislauf, eine partielle Absorption von Flashdampf mit gegenüber dem Absorptionsdampf höherem Druck, Entnahmedampf oder Zuführung von externer Wärme gekennzeichnet ist.

Die Stoff- und Energiebilanzen sowohl der erfindungsgemäßen Wasserkreisläufe als auch des Laugekreislaufes müssen einem stofflich geschlossenen thermischen Kreisprozess entsprechen, bei dem die Einkopplung der Energie über einen Wasserdampfwärmepumpenprozess und die Auskopplung der Energie über einen Wasserdampfkraftprozess erfolgt, wobei der Laugekreislauf das Arbeitsmittel für den Wärmepumpenprozess in Form von Desorptionsdampf und der Wasserkreislauf den für die Absorption erforderlichen Wasserdampf liefert.

Das erfindungsgemäße Verfahren ist auch dadurch gekennzeichnet, dass die Kompression des Desorptionsdampfes in mindestens zwei Schritten erfolgt. Der erste Schritt dient der Anhebung des Dampfdruckes auf mindestens einen Siededruck, der dem der unteren Siedetemperatur des Laugekreislaufes entspricht, während im zweiten Schritt der Kompression der Dampfdruck auf den Siededruck angehoben wird, der über diesem liegt und der mindestens der oberen Siedtemperatur der Lauge entspricht.

Damit ist das Verfahren gekennzeichnet durch drei Temperaturniveaus, die die Prozessführung erfindungsgemäß kennzeichnen. Dies sind die Kondensationstemperatur des Desorptionsdampfes sowie die konzentrations- und dampfdruckabhängige untere und obere Siedetemperatur der Lauge.

Die Wasserkreisläufe werden erfindungsgemäß über mindestens zwei Druckstufen geführt, wobei die Druckstufen des primären Wasserkreislaufes bestimmt werden durch die Druckstufen der Dampfinjektion und die des sekundären Wasserkreislaufes durch die der Flashverdampfung sowie die Siedetemperaturen der Lauge. Der obere Siedtemperatur im primären Wasserkreislauf muss über der Siedetemperatur der Reichen Lauge liegen.

Die erfindungsgemäß gestufte Druckerhöhung im primären Wasserkreisprozess ermöglicht zwischen Rück- und Vorlaufwasser
- eine vorzugsweise gestufte Kompression des Desorptionsdampfes, wobei im ersten Schritt auf mindestens der unteren Siedetemperatur der Lauge entsprechenden Dampfdruck komprimiert wird und
- damit die erfindungsgemäße gestufte Einspritzung von Wasser aus dem Wasserrück- und -vorlauf zum Zwecke der Erhöhung des Dampfmassestromes und zur Reduktion des Kompressionsaufwandes.

Erfindungsgemäß kennzeichnend für die Auskopplung von Energie aus dem Verfahren ist, dass das während der Absorption aufgeheizte zusammen mit dem während der Desorption gespeicherten Wasser des Wasserkreislaufes einer ein- oder mehrstufigen Flashverdampfung unterzogen und der so gebildete Flashdampf mit Sattdampfqualität ein- oder mehrstufig unter Abgabe von technischer Arbeit entspannt wird. Da diese Arbeit leistende Expansion immer ins Nassdampfgebiet des Dampfes führt und die Energieumwandlung neben Oberflächenverlusten der Vorrichtung auch Exergieverluste und damit Entropiezuwachs zur Folge hat, entsteht während der erfindungsgemäßen Expansion des Dampfes neben Dampfkondensat auch ein Dampfteilstrom, der vorteilhaft unter den Siededruck der Lauge expandiert werden kann und so für die Bereitstellung als Absorptionsdampf nicht geeignet ist, aber in einem Heizwärmeabsorber unter Abführung von Heizwärme in die Lauge eingebunden oder bei Umgebungstemperatur kondensiert werden kann. Das dabei entstehende Dampfkondensat muss dem Wasserkreislauf wieder zugeführt werden.

Daraus entsteht die nächste Aufgabe, die erfindungsgemäß gelöst wird, indem die Expansion des Sattdampfes aus der Flashverdampfung mehrstufig bis auf den Siededruck der Absorption entspannt und dieser zugeführt wird, während der verbleibende Dampf in einer nachfolgenden Expansion auf Umgebungstemperatur entspannt und kondensiert wird oder einer externen Nutzung, z.B. Heizwärmeversorgung, bei Rückführung seines Kondensates in den Wasserkreislauf, zugeführt wird. Die Rückführung des Kondensates kann erfindungsgemäß durch Zuführung von externem Wasser ersetzt werden.

Es ist auch erfindungsgemäß einen Teil der zyklisch durch Desorption erzeugten Reichen Lauge mit externem Wasserdampf, insbesondere mit Flashdampf aus der Auskühlung von Kühl- und Abwasser sowie Meerwasser zu beladen, die Absorptionswärme rekuperativ als Heizwärme abzuführen und das mit diesen Dämpfen zugeführte Wasser aus dem Verfahren abzuleiten und einer externen Verwertung, z. B. einer Trinkwasseraufbereitung zu zuführen.

Der angestrebte hohe Rückgewinnungsgrad der eingekoppelten Energie erfordert unter Beachtung des festen Zustandes der Lauge die Lagerung der Armen und der Reichen Lauge bei niedrigen Temperaturen, vorzugsweise bei etwa Umgebungstemperatur oder darüber. Die Lagertemperatur hängt insbesondere von der Förderfähigkeit, also von der dynamischen Viskosität der Lauge ab. Beispielsweise ist es zweckmäßig Reiche Natronlauge bei Temperaturen oberhalb von ca. 60 °C, vorzugsweise nicht unter ca. 70 °C zu lagern, um eine ausReichende Förderfähigkeit (Pumpbarkeit) zu gewährleisten. Erfindungsgemäß wird das gesichert durch rekuperative Übertragung der fühlbaren Wärme der aus der Desorption bzw. Absorption abfließenden Lauge an die diesen zufließende Lauge, wobei zur Sicherung der Wärmebilanz der Wasserkreislauf in diesen rekuperativen Wärmeaustausch eingebunden wird.

Das erfindungsgemäße Verfahren erlaubt eine Betriebsweise der Absorption und der Desorption bei unterschiedlichen Drücken. Beim Betrieb im Unterdruckbereich erscheint es allerdings zur Vermeidung des Wasserdampfvakuums in den Wasserkreisläufen vorteilhaft, die Kondensationswärme des Desorptionsdampfes an einen Wärmepumpenprozess mit externem Arbeitsmittel, wie Kohlendioxid, Schwefeldioxid o.a., und die Wärme für die Desorption aus diesen Arbeitsmitteln direkt an die Lauge, den Wasserkreislauf oder einen anderen Wärmeträger zu übertragen. Das Gleiche gilt sinngemäß auch für die Absorption.

Erfindungsgemäß wird die für die Kompression des Desorptionsdampfes erforderliche technische Arbeit durch Umwandlung von Elektroenergie bereitgestellt und das technische Arbeitsvermögen des während der Absorption anfallenden Sattdampfes aus der Flashverdampfung über eine Expansionsmaschine zur Elektroenergieerzeugung genutzt, der für die Absorption erforderliche Dampf einer ersten Expansionsmaschine entnommen, der Prozessstufe Absorption zugeführt und in die Lauge eingebunden, und der nach der Expansionsmaschine entnommene Dampf vor der Zuführung zur Absorption durch rekuperative Wärmeübertragung getrocknet.

Gemäß einer Ausführungsform ist die Expansionsmaschine eine Dampfturbine , der der für die Absorption erforderliche Dampf entnommen und der Lauge wieder zugeführt wird. Der der Turbine entnommene Dampf wird vor der Zuführung zur Absorption erfindungsgemäß durch rekuperative Wärmeübertragung getrocknet.

Gemäß einer weiteren bevorzugten Ausführungsform wird der für die Absorption nicht benötigte Dampf in einer Niederdruck-Dampfturbine expandiert und bei Umgebungstemperatur durch rekuperative Abführung seiner Kondensationswärme kondensiert.

Erfindungsgemäß bevorzugt wird ein Teil des Flashdampfes mit einem gegenüber dem Absorptionsdampf höheren Druck in Reiche Lauge absorbiert und die Absorptionswärme zur Überhitzung des Sattdampfes aus der Flashverdampfung verwendet oder der Sattdampf aus der Flashverdampfung wird durch rekuperative Zuführung von Wärme aus einem Wasserkreislauf überhitzt.

Eine weitere bevorzugte Ausführungsform ist derart ausgestaltet, dass aus dem Verfahren Wärme in Form von Desorptionsdampf oder Dampf aus der Flashverdampfung oder in Form von Vorlauf- oder Rücklaufwasser entnommen und einer externen Verwertung zugeführt und eventueller Wasserverlust durch externes Wasser ausgeglichen wird.

Erfindungsgemäß bevorzugt wird für die Absorption auch Dampf aus einer externen Verdampfung von Wasser eingesetzt und das dem Verfahren so zugeführte Wasser als Kondensat einer externen Verwertung zugeführt.

Eine weitere bevorzugte Ausführungsform ist derart ausgestaltet, dass der Dampf aus der Desorption nicht direkt komprimiert, sondern zum Zwecke der Verdampfung eines externen Wärmepumpen-Arbeitsmittels kondensiert wird.

Die erfindungsgemäße Vorrichtung bzw. das erfindungsgemäße System zur Energiespeicherung ist dadurch gekennzeichnet, dass mindestens ein Reaktor für die Desorption und Absorption von Wasserdampf aus der bzw. in die Lauge von einem Druckwasserkreislauf durchströmt und dort während der Desorption auf annähernd die untere Siedetemperatur der Lauge rekuperativ gekühlt und während der Absorption rekuperativ bis annähernd auf die obere Siedetemperatur wieder aufgeheizt wird. Das gilt auch für geteilte Wasserkreislaufe, wobei dann die oberen und unteren Siedetemperaturen der Lauge in Abhängigkeit von Desorptions- bzw. Absorptionsdruck unterschiedliches Niveau haben können.

Weiterhin kennzeichnend für die erfindungsgemäße Vorrichtung/das erfindungsgemäße System ist, dass die Einkopplung von elektrischer Energie durch ein- oder mehrstufige Kompression des Desorptionsdampfes vor seiner Einleitung in den Druckwasserkreislauf und der dortigen Kondensation erfolgt. Im ersten Schritt der mehrstufigen Kompression des Desorptionsdampfes, der das Druckniveau des Desorptionsdampfes vom Dampfdruck der Desorption über den Druck anhebt, der der Siedetemperatur der Armen Lauge und dem Druck des Druckwasserkreislaufes entspricht, erfolgt zum Zwecke der Dampfkühlung und der Erhöhung des Dampfmassestromes eine Einspritzung von Wasser aus dem Druckwasserkreislauf, während ab dem zweiten Schritt der mehrstufigen Kompression der Dampfdruck mit der letzten Kompressionsstufe über den der Siedetemperatur der Reichen Lauge entsprechenden Druck angehoben wird.

Erfindungsgemäß erfolgt die Aufheizung des Wasserkreislaufes in einer direkten Wasseraufwärmung schrittweise durch Einleitung von komprimiertem Dampf oder durch Einspritzung von Kreislaufwasser in den komprimiertren Dampf. Zu diesem Zwecke wird der Druck im Druckwasserkreislauf schrittweise, entsprechend dem zur Verfügung stehenden Dampfdruck, erhöht. Die schrittweise Erhöhung der Temperatur des Druckwasserkreislaufes durch Einleitung und Kondensation von Wasserdampf führt dazu, dass das dem Druckwasserkreislauf entnommene Einspritzwasser in den Druckwasserkreislauf zurückgeführt wird, sodass die Masse des Wassers im Druckwasserkreislauf theoretisch lediglich um die Masse des Desorptionsdampfes erhöht wird.

Die Berechnungen der Stoff- und Energiebilanzen haben jedoch eregeben, dass die Kondensationswärme des komprimierten Desororptionsdampfes nicht in jedem Falle vom Kreislaufwasser der Desorption aufgenommen werden kann. Erfindungsgemäß wird in einem solchen Falle dem Schichtenspeicher von unten in der Flashverdampfung des sekundären Wasserkreislaufes ausgekühltes Wasser entnommen und dem primären Wasserkreislauf zugeführt.

Die Aufnahme der Absorptionswärme in den Wasserkreislauf wird erfindungsgemäß ermöglicht, indem sein Wasser einer im Druck gestuften Flashverdampfung unterzogen wird, die einen Dampfmassestrom liefert, der mindestens dem des Desorptionsdampfes entspricht, wobei die letzte Stufe der Flashverdampfung unter einem Druck durchgeführt wird, der der Siedetemperatur der Armen Lauge entspricht. Somit ist es nach der letzten Stufe der Flashverdampfung erforderlich, den Druck im Druckwasserkreislauf wieder zu erhöhen auf einen Druck, der mindestens der Siedetemperatur der Reichen Lauge bzw. dem Druck im Wasserschichtenspeicher entspricht.

Zusammengefasst ergibt sich, dass der für die Beheizung der isobaren Desorption erforderliche Wasserkreislauf (Heizkreislauf oder primärer Wasserkreislauf), wie bei der Speisewasservorwärmung in Kraftwerken üblich, durch Einleiten von im Druck erhöhtem Wasserdampf, der durch die Wasserdampf-Wärmepumpe bereitgestellt wird, in das Kreislaufwasser, oder das Einspritzen von Kreislaufwasser in im Druck gestufte Dampfkondensatoren, eingestellt wird, was für die Gestaltung der Vorrichtung erfindungsgemäß die Verwendung von Ausrüstungen des Standes der Technik bei Kraftwerken ermöglicht. Die Abführung der Wärme der isobaren Absorption an den eingesetzten Wasserkreislauf (Kühlkreislauf oder sekundärer Wasserkreislauf) mit stufenweiser Flashverdampfung, der unter Abführung des Flashdampfes an eine Dampfturbine, abgekühlt und schließlich durch Aufnahme der Absorptionswärme im Temperaturniveau wieder regeneriert wird, lässt bei der Gestaltung der Vorrichtung ebenfalls Verwendung von Ausrüstungen des Standes der Technik zu.

Die Dampfturbine entspannt, unter Abgabe von technischer Arbeit, den anteilig höchsten Massestrom des zugeführten Flashdampfes auf das Druckniveau der Absorption und führt diese entspannten Dampf dem Reaktor als Absorptionsdampf zu, wo er unter Bildung von Armer Lauge in die Reiche Lauge eingebunden und mit der Armen Lauge aus dem Reaktor abgeführt wird. Der nicht für die Absorption erforderliche Gegendruckdampf aus der Turbine wird einer weitergehenden, technische Arbeit verrichtenden Expansion und danach einer Dampfkondensation oder einem Heizwärme lieferndem Absorber zugeführt.

Zur erfindungsgemäßen Vorrichtung / zum erfindungsgemäßen System gehört somit einerseits Baugruppen bestehend aus
- mehrstufigen Dampfkompressoren mit Wassereinspritzung
- mehrstufigen Aufheizungen von Kreislaufwasser durch Injektion von komprimiertem Dampf oder Einspritzung von Wasser in Dampfkondensatoren,
- Rekupreatoren zur Beheizung oder Kühlung
- Reaktoren zur Be- und Entladung von Lauge mit bzw. von Wasserdampf
- mehrstufige Expansionsmaschinen
- Produktspeicher für Arme Lauge sowie Reiche Lauge und Wasser, die mit der Baugruppe über Rekuperatoren verbunden sind, die die fühlbare Wärme der aus dem Reaktor abfließenden Stoffströme auf die dem Reaktor zufließenden Stoffströme indirekt übertragen.

Aus der Energiebilanz des erfindungsgemäßen Verfahrens ergibt sich, dass zur Beheizung der Desorption nur ein Teil des Desorptionsdampfes komprimiert werden muss. Daraus ergibt sich die Möglichkeit, den anderen Teil des Desorptionsdampfes für externe Verwendungen, wie z.B. die kommunale Wärme- und Warmwasserversorgung, abzuführen, was im Gegenzuge bei der Absorption allerdings die Zuführung von externem Dampf erfordern würde.

Die Vorteile der Erfindung ergeben sich aus der Verwendung von Arbeitsmitteln in Form von Lauge und Wasser und von Ausrüstungen aus der Kraftwerkstechnik und dem Chemieanlagenbau für eine standortunabhängige Speicherung und Rückgewinnung von Energie in Form von Elektroenergie und Wärme, vorzugsweise aus regenerativer Energie, und damit in der Qualifizierung der regenerativen Energie, insbesondere aus Windkraft- und Photovoltaikanlagen, für die bedarfsgerechte Versorgung. Die Erfindung ist insbesondere geeignet für den weiteren Ausbau der regenerativen Energie und für den Abbau von Überkapazitäten, d.h. für die Speicherung temporärer Überkapazitäten in der konventionellen Energieumwandlung der Kohle-, Öl-, Gas- und Kernenergie.

Die Erfindung soll anhand des folgenden Beispiels erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen und Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Ausführungsbeispiel

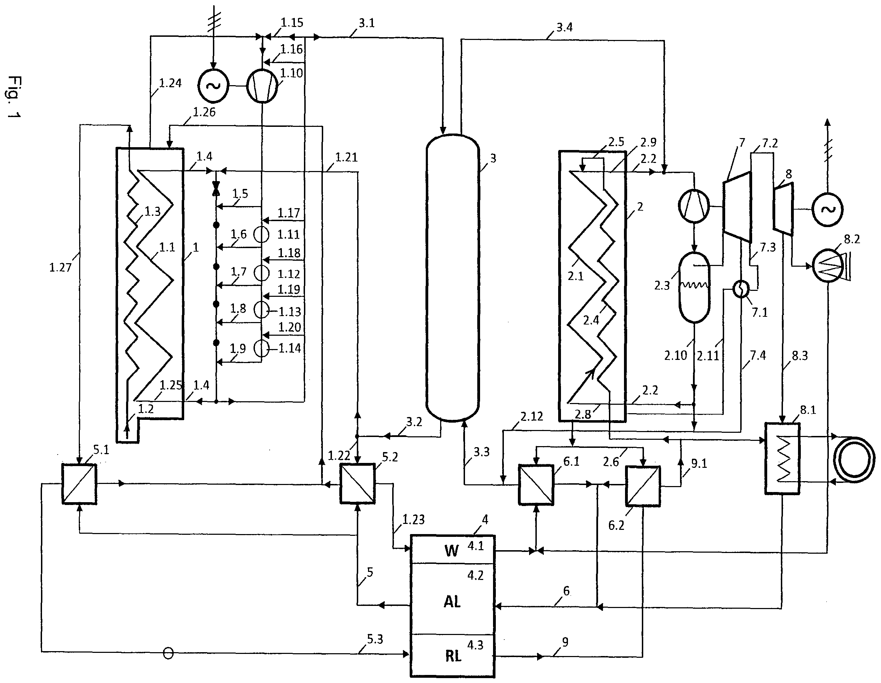

Das erfindungsgemäße Verfahren und die diesbezügliche Vorrichtung wird beispielhaft mit Hilfe von Figur 1 am Beispiel Natronlauge (NaOH) wie folgt beschrieben:
Grundlage für die Beschreibung ist eine rechnerische Abschätzung der Stoff- und Energiebilanz über einen Desorptions-/Absorptionszyklus (Z) im Konzentrationsbereich Arme Lauge mit x₁ = 0,40 bis Reiche Lauge mit x₂ = 0,74 kg NaOH/kg Lauge. Bezogen auf 1 kg NaOH heißt das, dass in einem Zyklus 2,50 kg Arme Lauge durch rekuperative Zuführung von Wärme in 1,15 kg Wasserdampf und 1,35 kg Arme Lauge zerlegt werden, und umgekehrt, dass durch Absorption von 1,15 kg Wasser in 1,35 kg Reicher Lauge unter Abführung der Absorptionswärme 2,50 kg Arme Lauge entstehen.

Der Siededruck der Lauge wird im Beispiel mit 1 bar, entsprechend einer Sattdampftemperatur von 100 °C, festgesetzt. Bei isobarer Betriebsweise ergeben sich die Siedetemperatur der Armen Lauge von 130 °C und die der Reichen Lauge von 195 °C. Die Sattdampftemperatur des Wasserdampfes und die Siedetemperaturen der Lauge begrenzen die Zustandsänderungen des erfindungsgemäßen Wärmepumpen- sowie des Kraftprozesses primär.

Die zyklische Desorption und Absorption wird in zwei getrennten Prozessstufen isobar durchgeführt, der Prozessstufe Desorption und der Prozessstufe Absorption. Der Desorptionsreaktor (1) ist mit einem mit Wasser durchfluteten Rekuperator (1.1) für die Beheizung der Lauge und mit einem weiteren mit Reicher Lauge durchströmten Rekuperator (1.3) zur internen Abkühlung der sich im Sumpf (1.2) des Desorptionsreaktors (1) sammelnden, 195 °C heißen Reichen Lauge, bis auf 132 °C ausgerüstet.

Der Absorptionsreaktor (2) der Prozessstufe Absorption ist mit einem ebenfalls mit Wasser durchfluteten Rekuperator (2.1) ausgestattet, der die Absorptionswärme über einen Wasserkühlkreislauf (2.2) einer ein- oder mehrstufigen Flashverdampfung (2.3) zuführt. Des Weiteren befindet sich im Absorptionsreaktor (2) ein mit Reicher Lauge durchströmter Rekuperator (2.4) zur internen Aufheizung der dem Reaktor zugeführten Reichen Lauge auf annähernd ihre Siedetemperatur (2.5) unter dem für die isobare Absorption eingestellten Dampfdruck.

Der zeitlich unabhängige Betrieb von Desorption und Absorption wird ermöglicht durch die Anordnung eines Heißwasserschichtenspeichers (3) und eines Produktspeichers (4) für Arme Lauge sowie Reiche Lauge und Wasser.

Diese Anordnung ermöglicht folgende Betriebsweise:
Das im Desorptionsreaktor (1) ausgekühlte Wasser des Heizwasserkreislaufes (1.4) wird nach Reduzierung seines Druckes auf den Druck der ersten Dampfinjektion (1.5) reduziert, was die Injektion eines Teils des in der ersten Kompressionsstufe (1.10) komprimierten Desorptionsdampfes (1.5) ermöglicht, im Beispiel 0,225 kg Wasserdampf/Z.

Der Desorptionsdampf (1.24) wird vor seiner Kompression in (1.10) durch Einspritzung von heißem Wasser aus dem Heizwasservorlauf (1.15) des Heizwasserkreislaufes (1.4) auf Sattdampfzustand gekühlt, wofür 0,038 kg/Z Wasser eingespritzt werden und danach mit Dampfaerosolen, die bei der Einspritzung des heißen Wassers in den Desorptionsdampf (1.16) entstehen, entsprechend einer Dampffeuchte beladen, die durch Zuführung der Kompressionsarbeit über (1.10) zum Sattdampfzustand des komprimierten Desorptionsdampfes (1.5) führt. Die Injektion des Dampfes (1.5) in das druckreduzierte Kreislaufwasser (1.4) hebt die Kreislaufwassertemperatur bis auf die Kondensationstemperatur des Injektionsdampfes (1.5) an.

Nachfolgend wird der Dampfdruck durch weitere Kompression (1.11 bis 1.14) und das Wasser im Heizwasserkreislauf (1.4) auf jeweils die Druckstufe, die weitere Injektionen (1.6 bis 1.9) von Dampf in den Heizwasserkreislauf (1.4) ermöglichen, angehoben. Im Beispiel sind die Druckstufen im Heizwasserkreislauf (1.4) und des Injektionsdampfes (1.5 bis 1.9) durch die folgenden Drücke, 4,2 - 6,2 - 8,5 - 11,5 - 15,0 bar, gekennzeichnet. Mit der letzten Stufe der Dampfinjektion (1.9) erreicht der Vorlauf des Heizwasserkreislaufes (1.25) eine Temperatur von 197°C.

Die Massenströme des Vorlaufes des Heißwasserkreislaufes werden wie folgt aufgeteilt 9,0 kg/Z werden dem Rekuperator (1.1) des Desorptionsreaktors als Heizwasser zugeführt. 0,24 kg/Z werden stufenweise in den komprimierten Desorptionsdampf unter teilweiser Flashverdampfung vor den Kompressionsstufen (1.10 bis 1.14) eingespritzt. Durch diese Einspritzung wird die Dampffeuchte vor diesen Kompressionsstufen auf 0,12 - 0,08 - 0,03 - 0,02 - 0,025 kg Wasser/kg Sattdampf eingestellt. Bei dieser Fahrweise erhöht sich der Wassermassestrom im Heizwasserkreislauf (1.4) um 1,89 kg/Z, wovon 0,24 kg/Z für die Wassereinspritzungen, einschließlich der Dampfkühlung (1.17), eingesetzt werden. Somit ergibt sich im Beispiel bei adiabatem Betrieb der Dampfkompression ein Heizwasserüberschuss (3.1) von 1,65 kg/Z, der dem Heißwasserschichtenspeicher (3) von oben zugeführt wird. Dementsprechend wird die gleiche Masse ausgekühltes Kreislaufwasser (3.2) des Kühlkreislaufes der Prozessstufe Absorption aus dem Heizwasserschichtenspeicher (3) unten ausgetragen. Von diesem aus dem Heißwasserschichtenspeicher ausgetragenen Wasser (3.2) werden über (1.21) 0,5 kg/Z dem Rücklauf des Heizwasserkreislaufes (1.4) und damit der gestuften Dampfinjektion zugeführt. Die dem Massestrom des Desorptionsdampfes (1.24) entsprechende restliche Wassermasse (1.22) von 1,15 kg/Z, entspricht dem Kondensat des Desorptionsdampfes, wird eingesetzt für die rekuperative Vorwärmung (5.2) eines Teilstromes der der Desorption zuzuführenden Armen Lauge (5), die dem Produktspeicher (4) mit ca. 65 °C entnommen wird, wodurch der Wassermassestrom (1.23) auf unter 70 °C abgekühlt wird, bevor dieser dem Produktspeicher (4) zugeführt wird.

Die Stoffbilanz der Prozessstufe Desorption wird durch die Entnahme von insgesamt 2,50 kg Arme Lauge/Z (5) aus dem Produktspeicher (4) geschlossen. Teile der Armen Lauge werden im Rekuperator (5.2) durch das Kondensat (1.23) und im Rekuperator (5.1) durch die aus dem Rekuperator (1.3) zufließende Reiche Lauge (1.27) auf eine Mischtemperatur von 127 °C (1.26) vorgewärmt. Nachdem Rekuperator (5.1) beträgt die Temperatur der Reichen Lauge (5.3) ca. 70 °C.

Unter Nutzung des Austausches der fühlbaren Wärme der aus dem Desorptionsreaktor abströmenden Massestrom der Reichen Lauge (1.27) und des Wassers aus dem Heizwasserschichtenspeichers (1.19) reduziert sich der Wärmeeintrag über den Rekuperator (1.1) im Desorptionsreaktor auf 2.560 kJ/Z. Bei einer Temperaturspreizung zwischen Heizwasservor- und -rücklauf von 65 K errechnet sich ein Heizwassermassestrom (1.4), der den Rekuperator (1.1) durchströmt, von 9 kg/Z.

Der erfindungsgemäße Heizwasserkreislauf (1.4) durchströmt den Rekuperator (1.1) zum Zwecke der Beheizung der Desorption von unten nach oben, wobei sich seine Temperatur von 197 °C auf 132 °C abkühlt. Die vorgewärmte Arme Lauge (1.26) wird zum Zwecke der Desorption von oben mit einer Temperatur von bis zu 127 °C in den Reaktor gesprüht, während die durch Zuführung von Wärme aus dem Wasserkreislauf entstandene 195 °C heiße Reiche Lauge aus dem Sumpf des Reaktors über den Rekuperator (1.3) mit einer Temperatur von 132 °C abgezogen und nach weiterer rekuperativer Abführung fühlbarer Wärme in (5.1) dem Produktspeicher (4) zugeführt wird.

Die Wärmebilanz der Desorption wird somit neben der Wärmezuführung durch den Wasserkreislauf, bestimmt durch den Wärmeeintrag über die Arme Lauge und durch den Wärmeaustrag über die Reiche Lauge sowie den Desorptionsdampf.

Unter den beschriebenen Bedingungen ist für die Kompression des durch Wassereinspritzung (1.15) gekühlten und vor den Kompressionsstufen durch Wassereinspritzung (1.16) in den Zustand des Nassdampfes überführten Dampf ein adiabater Kompressionsaufwand von insgesamt ca. 500 kJ/Z erforderlich.

Die Realisierung der Prozessstufe Absorption (2) beginnt mit der Zuführung des im Produktspeicher (4) gespeicherten Dampfkondensats (4.1) und der Reichen Lauge (4.3) zum Absorptionsreaktor (2). Beide Stoffströme werden durch die aus dem Absorptionsreaktor (2) abfließende Arme Lauge (2.6) in den Rekuperatoren (6.1 und 6.2) auf 128 °C vorgewärmt. Das so vorgewärmte Dampfkondensat wird im Heizwasserschichtenspeicher (3) von unten zugeführt. Die vorgewärmte Reiche Lauge gelangt in den internen Rekuperator der Absorption (2.4) wo sie weiter auf 192 °C vorgewärmt wird, bevor sie über den Rekuperatorflächen (2.1) versprüht (2.5) wird.

Durch Zuführung von 1.15 kg 1 bar trockenem Absorptionsdampf (2.11) zum Absorptionsreaktor (2) werden die Voraussetzungen für die Umwandlung der Reichen Lauge unter Abführung der Absorptionswärme über die Rekuperatoren (2.1 und 2.4) in Arme Lauge eingestellt. Die Kühlleistung des Rekuperators (2.1) beträgt ca. 2400 kJ/Z, woraus sich bei einer Temperaturspreizung zwischen Kühlwasservorlauf (2.8) und Kühlwasserrücklauf (2.9) von 64 K ein Kühlwassermassestrom (2.2) von 8,60 kg/Z errechnet.

Zusätzlich zum vorgewärmten Dampfkondensat aus Rekuperator (6.1) werden dem Heizwasserschichtenspeicher (3) für den Kühlkreislauf (2.8) nicht benötigtes, durch Flashverdampfung auf 128 °C ausgekühltes Wasser (2.12), sowie die Kondensate (7.4) zugeführt. Der Gesamtmassestrom des dem Heizwasserschichtenspeicher (3) von unten zugeführten Wassers entspricht der über (3.1) zugeführten Wassermasse aus dem Desorptionsprozess, die auf Grund der Zuführung des ausgekühlten Wassers (3.3) zum Heizwasserschichtenspeicher aus diesem verdrängt und dem Rücklaufwasser (2.9) des Kühlwasserkreislaufes der Absorption zugemischt wird.

Für die Flashverdampfung steht somit insgesamt eine Wassermasse von 10,25 kg/Z zur Verfügung. Durch vierstufige Flashverdampfung (2.3) können aus diesem Wassermassestrom 1,303 kg Sattdampf der Druckstufen 10,0 - 7,0 - 4,2 - 2,5 bar erzeugt werden. Bei einer Entspannung dieser Flashdämpfe in der Expansionmaschine (7) auf 1 bar kann dieser Dampf eine technische Arbeit von ca. 360 kJ/Z leisten.

Da der Flashdampf nach Expansion auf 1 bar mit einer Dampffeuchte von ca. 0,09 kg/kg vorliegt, wird im Beispiel Dampf bei ca. 1,1 bar der Expansionsturbine (7) entnommen, der zum Zwecke der Trocknung des als Absorptionsdampf benötigten Gegendruckdampfes (7.3) im Rekuperator (7.1) kondensiert wird. Der verbleibende Gegendruckdampf (7.2) wird in einer weiteren Expansionsturbine (8) auf Umgebungstemperatur entspannt und im Kondensator (8.2) kondensiert.

In diesem Strom zu Strom Modus erreicht das erfindungsgemäße Verfahren unter adiabaten Bedingungen eine Stromrückgewinnungsgrad von ca. 77 %. Durch Erhöhung der Anzahl der Flashstufen kann der Wirkungsgrad auch unter den Bedingungen isentroper Kompression und Expansion auf über 80 % angehoben werden.

Alternativ zu dieser Entspannung des Gegendruckdampfes (7.2) bis auf Umgebungstemperatur kann im Beispiel die Expansion bei einem höheren Gegendruck, z. B. 0,1 bar abgeschlossen und der Gegendruckdampf einem Heizabsorber (8.1) zugeführt werden, in dem dieser mit Reicher Lauge (9.1) zu Armer Lauge (6) unter Abführung der Absorptionswärme an eine Wärmesenke (8.4) mit einer für die Fernwärmeversorgung ausReichenden Vorlauftemperatur von 110 °C umgewandelt wird. Auf diese Art kann dann Wärme mit bis zu 2400 kJ/kg Gegendruckdampf aus dem Absorptionsprozess ausgekoppelt und der Energierückgewinnungsgrad durch den Kraft-Wärme-Modus auf über 90 % erhöht werden.

Die in der industriellen Nutzung möglichen technisch-ökonomischen Kennziffern hängen maßgeblich vom Gütegrad der Maschinen für die Kompression und Expansion ab.

Zusammenfassend betrifft die Erfindung ein Verfahren und eine Vorrichtung zur Speicherung von Energie in Lauge zum Zwecke der Qualifizierung von regenerativer Energie, insbesondere aus Windkraft- und Photovoltaikanlagen, für die bedarfsgerechte Versorgung der Abnehmer, und/oder zur Speicherung temporärer Überkapazitäten der konventionellen Energiewirtschaft durch Absorption und Desorption von Wasserdampf in bzw. aus Laugen, z.B. Natronlauge, wobei die Einkopplung der Elektroenergie durch elektrische Antriebe für die Kompression des Dampfes aus der Desorption erfolgt und die Rückgewinnung der eingekoppelten Energie durch Nutzung der Absorptionswärme für die Aufheizung und Flashverdampfung, sowie technische Arbeit leistende Expansion des Flashdampfes auf das Druckniveau der Absorption realisiert wird. Der Vorteil der Erfindung ist die standortunabhängige Speicherung von Energie mit gegenüber dem Stand der Technik hoher Energiedichte bis zu einem Arbeitsvermögen, welches bisher nur von Wasserpumpspeicherwerken erreicht wurde.

### Bezugszeichenliste

1 Desorptionsreaktor
(1.1) Desorptionsrekuperator/Heizrekuperator
(1.2) Sumpf des Desorptionsreaktors
(1.3) Rekuperator Reiche Lauge Kühlung
(1.4) Heizwasserkreislauf (primärer Wasserkreislauf)
(1.5) 1. Dampfinjektion
(1.6) 2. Dampfinjektion
(1.7) 3. Dampfinjektion
(1.8) 4. Dampfinjektion
(1.9) 5. Dampfinjektion
(1.10) 1. Kompressionsstufe
(1.11) 2. Kompressionsstufe
(1.12) 3. Kompressionsstufe
(1.13) 4. Kompressionsstufe
(1.14) 5. Kompressionsstufe
(1.15) 1. Wassereinspritzung/Dampfkühlung
(1.16) 2. Wassereinspritzung
(1.17) 3. Wassereinspritzung
(1.18) 4. Wassereinspritzung
(1.19) 5. Wassereinspritzung
(1.20) 6. Wassereinspritzung
(1.21) Zuführung Bilanzwasser
(1.22) Kondesat zum Produktspeicher
(1.23) ausgekühltes Kondensat zum Produktspeicher
(1.24) Desorptionsdampf
(1.25) Heizwasservorlauf
(1.26) Zuführung Arme Lauge zum Desorber
(1.27) Abführung Reiche Lauge aus Desorber
(2) Absorptionsreaktor
(2.1) Kühlrekuperator
(2.2) Wasserkühlkreislauf (sekundärer Wasserkreislauf)
(2.3) gestufte Flashverdampfung
(2.4) interner Rekuperator in Absorbtion zur Aufheizung der Reichen Lauge
(2.5) Zuführung der Reichen Lauge
(2.6) Abfluss Arme Lauge
(2.8) Kühlwasservorlauf
(2.9) Kühlwasserrücklauf
(2.10) Zuführung des ausgekühlten Wassers aus Flashverdampfung zum Heißwasserschichtenspeicherspeicher
(2.11) Getrockneter Absoprtionsdampf
(3) Heißwasserschichtenspeicher
(3.1) Überschusswasser aus primärem Wasserkreislauf
(3.2) Ableitung Verdrängungswasser aus Wasserschichtenspeicher
(3.3) Zuführung von Überschusswasser aus sekundärem Wasserkreislauf
(3.4) Abführung Verdrängungswasser aus Wasserschichtenspeicher
(4) Dreikammer-Produktspeicher für ausgekühlte Arme Lauge, Reiche Lauge, Wasser
(4.1) Speicherkammer für Wasser
(4.2) Speicherkammer für Arme Lauge
(4.3) Speicherkammer für Reiche Lauge
(5) Zuführung Armer Lauge zur Desorption
(5.1) Vorwärmrekuperator für 1. Teilstrom Arme Lauge gegen Reiche Lauge
(5.2) Vorwärmrekuperator für 2. Teilstrom Arme Lauge gegen Wasser
(5.3) ausgekühlte Reiche Lauge zum Produktspeicher
(6) ausgekühlte Arme Lauge zum Produktspeicher
(6.1) Vorwärmrekuperator für Wasser durch 1. Teilstrom Arme Lauge
(6.2) Vorwärmrekuperator für Reiche Lauge durch 2. Teilstrom Arme Lauge
(7) Expansionsmaschine
(7.1) Trocknung des als Absorptionsdampf benötigten Gegendruckdampfes
(7.2) Überschuss 1bar Gegendruckdampf
(7.3) Absorptionsdampf im Nassdampfzustand
(7.4) Trocknerkondensat
(8) Niederdruckexpansionsmaschine mit Elektrogenerator
(8.1) Heizwärmeabsorber
(8.2) Kondensator/Kühlturm
(8.3) Entnahmedampf für Heizabsorber
(8.4) Wärmesenke
(9) Entnahme von Reicher Lauge (70°C) aus dem Produktspeicher
(9.1) vorgewärmte Reiche Lauge

## Patentansprüche

1. Verfahren zur Speicherung von Energie in Lauge durch Desorption (1) von Wasserdampf aus Armer Lauge und Absorption (2) von Wasserdampf in Reiche Lauge, wobei Laugekreisläufe mit primären und sekundären wässrigen Wärmeträgerkreisläufen (1.4, 2.2), so kombiniert werden, dass
- einerseits aus einem primären Wärmeträgerkreislauf (1.4) die für die Desorption (1) erforderliche Wärme rekuperativ an die Lauge übertragen (1.1) und die abgeführte Wärme im Wärmeträgerkreislauf ersetzt wird durch rekuperative Wärmezuführung und/oder indem der bei der Desorption der Lauge anfallende Wasserdampf (1.24) komprimiert (1.10) und in den Wärmeträgerkreislauf durch Kondensation (1.5) in diesen eingebunden wird oder der Dampf aus der Desorption (1) zum Zwecke der Verdampfung eines externen Wärmepumpen-Arbeitsmittels kondensiert wird, und
- andererseits die bei der Absorption anfallende Wärme aus der Lauge an einen sekundären wässrigen Wärmeträgerkreislauf (2.2) übertragen und in den Wärmeträger eingebundenes Wasser durch Flashverdampfung (2.3) über Sattdampf aus diesem wieder abgeführt wird,
wobei
die für die Kompression (1.10) des Desorptionsdampfes (1.24) erforderliche technische Arbeit durch Umwandlung von Elektroenergie bereitgestellt und das technische Arbeitsvermögen des während der Absorption (2) anfallenden Sattdampfes aus der Flashverdampfung (2.3) über eine Expansionsmaschine (7, 8) zur Elektroenergieerzeugung genutzt wird,
der für die Absorption (2) erforderliche Dampf einer ersten Expansionsmaschine (7) entnommen, der Prozessstufe Absorption (2) zugeführt und in die Lauge eingebunden wird, und
der nach der Expansionsmaschine (7) entnommene Dampf vor der Zuführung zur Absorption (2) durch rekuperative Wärmeübertragung getrocknet wird (7.1).

2. Verfahren nach Anspruch 1, wobei Absorption (2) und Desorption (1) zwischen zwei Konzentrationen der Lauge stattfinden, die sowohl die Arme und die Reiche Lauge, als auch die untere und die obere Siedetemperatur der Lauge kennzeichnen sowie die Vorlauf- und Rücklauftemperatur der primären und sekundären Wärmeträgerkreisläufe (1.4, 2.2) begrenzen.

3. Verfahren nach Anspruch 1 und 2, wobei der durch Desorption (1) freigesetzte Wasserdampf mehrstufig komprimiert (1.10 - 1.14) wird, wobei Wasser aus einem primären Wärmeträgerkreislauf (1.4) entnommen und in den überhitzten Dampf aus der Desorption (1) vor der ersten Kompressionsstufe (1.10) und nach jeder weiteren Kompressionsstufe so eingespritzt (1.15 - 1.20) wird, dass der jeweilige Dampf auf Sattdampftemperatur gekühlt oder durch Wassereinspritzung vor der Kompression in Nassdampf mit einer Dampffeuchte überführt wird , die durch nachfolgende Kompression zum trockenen Sattdampfzustand des komprimierten Dampfes führt.

4. Verfahren nach einem der Ansprüche 1 bis 3, wobei die für die Kompression des Desorptionsdampfes (1.24) erforderliche technische Arbeit durch Umwandlung von Elektroenergie über Elektromotoren oder Magnetpumpen bereitgestellt wird und das technische Arbeitsvermögen des während der Absorption anfallenden Sattdampfes aus der Flashverdampfung (2.3) über eine mechanische oder elektromagnetische Expansionsmaschine (7, 8) zur Elektroenergieerzeugung genutzt wird.

5. Verfahren nach einem der Ansprüche 1 bis 4, wobei der für die Absorption nicht benötigte Dampf in einer Niederturbine oder anderen Expansionsmaschine (8) weiter expandiert und bei Umgebungstemperatur durch rekuperative Abführung seiner Kondensationswärme kondensiert (8.2) wird.

6. Verfahren nach einem der Ansprüche 1 bis 5, wobei ein Teil des Flashdampfes in Reiche Lauge (2.5) absorbiert und die Absorptionswärme zur Überhitzung des Sattdampfes des anderen Teiles Dampfes der Flashverdampfung verwendet oder der Sattdampf aus der Flashverdampfung durch rekuperative Zuführung von Wärme aus einem Wasserkreislauf oder exterener Wärme überhitzt wird.

7. Verfahren nach einem der Ansprüche 1 bis 6, wobei zwischen dem primären und sekundären Wärmeträgerkreislauf (1.4, 2.2) ein Wärmeträgerschichtenspeicher (3) integriert wird.

8. Verfahren nach einem der Ansprüche 1 bis 7, wobei die Einbindung des Desorptionsdampfes (1.24) in den primären Wärmeträgerkreislauf (1.4) durch Kondensation erfolgt und das so zugeführte Wasser aus diesem abgeleitet und einem Wärmeträgerschichtenspeicher (3) zugeführt wird.

9. Verfahren nach einem der Ansprüche 7 oder 8, wobei das Wasser aus dem Schichtenspeicher (3) wieder entnommen wird und die nach der Desorption vorliegende Reiche Lauge (1.27) ihre fühlbare Wärme rekuperativ (5.1) an die der Desorption zufließende Arme Lauge (1.26) überträgt.

10. Verfahren nach einem der Ansprüche 7 bis 9, wobei die rekuperativ ausgekühlte Reiche Lauge aus der Desorption(5.3) und das ausgekühlte Wasser (1.23) einem Kammerspeicher (4) zugeführt werden, aus dem sie im für die Absorption (2) erforderlichen Maße wieder entnommen und durch die aus der Absorption abfließenden Armen Lauge (2.6) vorgewärmt (6.1, 6.2) werden, wobei die Reiche Lauge (9.1) der Absorption direkt und das Wasser als Verdrängungsmasse (3.3) dem Schichtenspeicher (3) zugeführt werden.

11. Verfahren nach einem der Ansprüche 1 bis 10, wobei aus dem Verfahren Wärme in Form von Desorptionsdampf (1.24) oder Dampf aus der Flashverdampfung (2.3) oder in Form von Wärmeträger aus dem Vorlauf- oder Rücklauf der Wärmeträgerkreisläufe (1.25, 2.8, 2.9) entnommen oder als Absorptionswärme (8.1) einer externen Verwertung zugeführt und eventueller Wasserverlust durch externes Wasser (1.21) ausgeglichen wird.

12. Verfahren nach einem der Ansprüche 1 bis 11, wobei für die Absorption (2) auch Dampf aus einer externen Quelle oder aus einer externen Flashverdampfung von Wasser eingesetzt und das dem Verfahren so zugeführte Wasser als Kondensat einer externen Verwertung, insbesondere einer Trinkwasseraufbereitung, zugeführt werden.

## Claims

1. A method for storing energy in lye by desorption (1) of water vapour from poor lye and absorption (2) of water vapour into rich lye, wherein lye cycles are combined with primary and secondary aqueous heat carrier circuits (1.4, 2.2), such that
- on the one hand, the heat required for the desorption (1) is recuperatively transferred (1.1) from a primary heat carrier circuit (1.4) to the lye (1.1) and the dissipated heat is replaced in the heat carrier circuit by recuperative heat supply and/or in that the water vapour (1.24) resulting from the desorption of the lye is compressed (1.10) and incorporated into the heat carrier circuit by condensation (1.5) or the vapour from the desorption (1) is condensed for the purpose of evaporating an external heat pump working medium, and
- on the other hand, the heat generated during absorption is transferred from the lye to a secondary aqueous heat carrier circuit (2.2) and water bound into the heat carrier is removed from it by flash evaporation (2.3) via saturated vapour,
wherein
the technical work required for the compression (1.10) of the desorption vapour (1.24) is provided by conversion of electrical energy and the technical work capacity of the saturated vapour from the flash evaporation (2.3) produced during absorption (2) is utilized for electrical energy production via an expansion machine (7, 8),
the vapour required for the absorption (2) is taken from a first expansion machine (7), fed to the absorption (2) process stage and incorporated into the lye, and
the vapour extracted after the expansion machine (7) is dried by recuperative heat transfer (7.1) before it is fed to the absorption (2).

2. The method according to claim 1, wherein absorption (2) and desorption (1) take place between two concentrations of the lye, which characterize the poor and the rich lye, as well as the lower and the upper boiling temperature of the lye, and limit the flow temperature and the return temperature of the primary and secondary heat carrier circuits (1.4, 2.2).

3. The process according to claims 1 and 2, wherein the water vapour released by desorption (1) is compressed (1.10 - 1.14) in a multistage process, wherein water is taken from a primary heat carrier circuit (1.4) and is injected into the superheated vapour from the desorption (1) before the first compression stage (1. 10) and after each further compression stage (1.15 - 1.20) in such a way that the respective vapour is cooled to saturated vapour temperature or is converted by water injection prior to compression into wet vapour with a vapour moisture content that leads to dry saturated vapour state of the compressed vapour by subsequent compression.

4. The method according to one of claims 1 to 3, wherein the technical work required for the compression of the desorption vapour (1.24) is provided by conversion of electrical energy via electric motors or magnetic pumps and the technical work capacity of the saturated vapour occurring during the absorption from the flash evaporation (2.3) is utilized for electrical energy production via a mechanical or electromagnetic expansion machine (7, 8).

5. The method according to one of claims 1 to 4, wherein the vapour not required for absorption is further expanded in a low-pressure turbine or other expansion machine (8) and is condensed (8.2) at ambient temperature by recuperative removal of its heat of condensation.

6. The method according to any one of claims 1 to 5, wherein a portion of the flash vapour is absorbed into rich lye (2.5) and the heat of absorption is utilized to superheat the saturated vapour of the other portion of vapour of the flash evaporation or the saturated vapour from the flash evaporation is superheated by recuperative supply of heat from a water cycle or external heat.

7. The method according to one of claims 1 to 6, wherein a stratified storage for heat carrier (3) is integrated between the primary and secondary heat carrier circuit (1.4, 2.2).

8. The method according to one of claims 1 to 7, wherein the incorporation of the desorption vapour (1.24) into the primary heat carrier circuit (1.4) is effected by condensation and the water thus supplied is discharged therefrom and fed to a stratified storage for heat carrier (3).

9. The method according to one of claims 7 or 8, wherein the water is removed from the stratified storage (3) and the rich lye (1.27) present after the desorption transfers its sensible heat recuperatively (5.1) to the poor lye (1.26) flowing into the desorption.

10. The method according to one of claims 7 to 9, wherein the recuperatively cooled rich lye from the desorption (5.3) and the cooled water (1.23) are fed to a chamber storage (4), from which they are removed to the extent necessary for absorption (2) and are preheated (6.1, 6.2) by the poor lye (2.6) flowing out of the absorption, wherein the rich lye (9.1) of the absorption is fed directly and the water as displacement mass (3.3) is fed to the stratified storage (3).

11. The method according to one of claims 1 to 10, wherein heat in the form of desorption vapour (1.24) or vapour from flash evaporation (2.3) or in the form of heat carrier from the flow or return flow of the heat carrier circuits (1.25, 2.8, 2.9) is removed from the process or is supplied as absorption heat (8.1) to an external utilization and a potential water loss is compensated by external water (1.21).

12. The method according to one of claims 1 to 11, wherein vapour from an external source or from an external flash evaporation of water is also utilized for the absorption (2) and the water thus supplied to the process is fed as condensate to an external utilization, in particular to a drinking water treatment plant.

## Revendications

1. Procédé de stockage d'énergie dans une solution alcaline par désorption (1) de vapeur d'eau à partir de solution alcaline pauvre et absorption (2) de vapeur d'eau dans de la solution alcaline riche, dans lequel des circuits de solution alcaline sont combinés avec des circuits caloporteurs aqueux primaire et secondaire (1.4, 2.2) de telle manière que
- d'une part, à partir d'un circuit caloporteur primaire (1.4), la chaleur nécessaire à la désorption (1) est transférée par récupération à la solution alcaline (1.1) et la chaleur dissipée dans le circuit caloporteur est remplacée par un apport de chaleur de récupération et/ou en comprimant (1.10) la vapeur d'eau (1.24) formée lors de la désorption de la solution alcaline et en l'introduisant dans le circuit caloporteur par condensation (1.5) dans celui-ci, ou la vapeur produite par la désorption (1) est condensée à des fins d'évaporation d'un fluide de travail de pompe à chaleur externe, et
- d'autre part, la chaleur formée par l'absorption est transférée de la solution alcaline à un circuit caloporteur (2.2) aqueux secondaire et de l'eau introduite dans le caloporteur est évacuée par évaporation instantanée (2.3) via de la vapeur saturée à nouveau à partir de celui-ci,
et dans lequel
le travail technique nécessaire pour la compression (1.10) de la vapeur de désorption (1.24) est fourni par conversion d'énergie électrique et la capacité de travail technique de la vapeur saturée formée pendant l'absorption (2) à partir de l'évaporation instantanée (2.3) est utilisée par une machine d'expansion (7, 8) pour produire de l'énergie électrique,
la vapeur nécessaire à l'absorption (2) est prélevée d'une première machine d'expansion (7), amenée à l'étape d'absorption (2) et intégrée dans la solution alcaline, et
la vapeur prélevée après la machine d'expansion (7) est séchée (7.1) avant de l'amener à l'absorption (2) par transfert de chaleur par récupération.

2. Procédé selon la revendication 1, dans lequel l'absorption (2) et la désorption (1) ont lieu entre deux concentrations de la solution alcaline, qui caractérisent les solutions alcalines pauvre et riche ainsi que la température d'ébullition basse et haute de la solution alcaline et qui délimitent la température d'aller et de retour des circuits caloporteurs primaire et secondaire (1.4, 2.2).

3. Procédé selon la revendication 1 ou 2, dans lequel la vapeur d'eau libérée par la désorption (1) est comprimée (1.10 - 1.14) en plusieurs étages, dans lequel de l'eau est prélevée à partir d'un circuit caloporteur primaire (1.4) et est injectée (1.15 - 1.20) dans de la vapeur surchauffée provenant de la désorption (1) avant le premier étage de compression (1.10) et après chaque étage de compression supplémentaire de telle manière que la vapeur respective est refroidie à une température de vapeur saturée ou est convertie par injection d'eau avant la compression en vapeur humide ayant une humidité de vapeur, qui conduit par compression ultérieure à un état de vapeur saturée sec de la vapeur comprimée.

4. Procédé selon l'une des revendications 1 à 3, dans lequel le travail technique nécessaire pour la compression de la vapeur de désorption (1.24) est fourni par conversion d'énergie électrique par l'intermédiaire de moteurs électriques ou de pompes magnétiques et la capacité de travail technique de la vapeur saturée formée pendant l'absorption à partir de l'évaporation instantanée (2.3) est utilisée par le biais d'une machine d'expansion mécanique ou électromagnétique (7, 8) pour produire de l'énergie électrique.

5. Procédé selon l'une des revendications 1 à 4, dans lequel la vapeur non nécessaire à l'absorption est encore détendue dans une turbine à basse pression ou une autre machine d'expansion (8) et est condensée (8.2) à une température ambiante par dissipation à récupération de sa chaleur de condensation.

6. Procédé selon l'une des revendications 1 à 5, dans lequel une partie de la vapeur instantanée est absorbée dans la solution alcaline riche (2.5) et la chaleur d'absorption est utilisée pour surchauffer la vapeur saturée de l'autre partie de la vapeur issue de l'évaporation instantanée ou la vapeur saturée provenant de l'évaporation instantanée est surchauffée par un apport de chaleur à récupération provenant d'un circuit d'eau ou de chaleur extérieure.

7. Procédé selon l'une des revendications 1 à 6, dans lequel un accumulateur stratifié à caloporteur (3) est intégré entre les circuits caloporteurs primaire et secondaire (1.4, 2.2).

8. Procédé selon l'une des revendications 1 à 7, dans lequel l'introduction de la vapeur de désorption (1.24) dans le circuit caloporteur primaire (1.4) s'effectue par condensation et l'eau ainsi alimentée est évacuée de ce dernier et amenée à un accumulateur stratifié à caloporteur (3).

9. Procédé selon l'une des revendications 7 ou 8 dans lequel l'eau provenant de l'accumulateur stratifié (3) est à nouveau prélevée et la solution alcaline riche (1.27) présente après la désorption transfère sa chaleur sensible par récupération (5.1) à la solution alcaline pauvre (1.26) alimentant la désorption.

10. Procédé selon l'une des revendications 7 à 9, dans lequel la solution alcaline riche refroidie par récupération, provenant de la désorption (5.3) et l'eau refroidie (1.23) sont amenées à un accumulateur à chambre (4), à partir duquel elles sont à nouveau prélevées autant que nécessaire à l'absorption (2) et sont préchauffées (6.1, 6.2) par la solution alcaline pauvre (2.6) s'écoulant hors de l'absorption, dans lequel la solution alcaline riche (9.1) est alimentée directement à l'absorption et l'eau est alimentée à l'accumulateur stratifié (3) sous forme de masse de refoulement (3.3).

11. Procédé selon l'une des revendications 1 à 10 dans lequel de la chaleur produite à partir du procédé, sous forme de vapeur de désorption (1.24) ou de vapeur provenant de l'évaporation instantanée (2.3) ou sous forme de fluide caloporteur provenant des circuits d'aller ou de retour des circuits caloporteurs (1.25, 2.8, 2.9) est prélevée ou est alimentée sous forme de chaleur d'absorption (8.1) à un dispositif de valorisation extérieur et une perte d'eau éventuelle est compensée par de l'eau extérieure (1.21).

12. Procédé selon l'une des revendications 1 à 11, dans lequel de la vapeur provenant d'une source extérieure ou d'une évaporation instantanée d'eau extérieure est utilisée en outre pour l'absorption (2) et l'eau ainsi alimentée au procédé est amenée sous forme de condensat à un dispositif de valorisation extérieur, notamment à un traitement d'eau potable.
